# EUROPÄISCHE PATENTANMELDUNG

(11) **EP 4 279 400 A1**
(43) Veröffentlichungstag der Anmeldung: **22.11.2023**
(21) Anmeldenummer: 23166780.9
(22) Anmeldetag: 05.04.2023
(51) Int. Cl.: B65B 9/04, B29C 51/00, B65B 41/14, B65B 47/00

(54) **VERPACKUNGSMASCHINE UND VERFAHREN ZUR HERSTELLUNG VON VERPACKUNGEN**

(30) Priorität: 05.04.2022 DE 102022108185
(71) Anmelder: Syntegon Technology GmbH, 71332 Waiblingen (DE)
(72) Erfinder: Bischoff, Bernd Konrad, 71332 Waiblingen (DE); Karcher, Rüdiger, 73547 Lorch (DE); Beck, Martin, 73655 Pluederhausen (DE)
(74) Vertreter: Daub, Thomas

(57) **Zusammenfassung**

Die Erfindung geht aus von einer Verpackungsmaschine (10b), insbesondere Form-, Füll- und Verschließmaschine, zur Herstellung von Verpackungen, insbesondere Clamshell-Verpackungen, aus faserbasiertem Packstoff, mit einer ersten Umformeinheit (12b) zur Einbringung zumindest einer ersten Kavität (14b) in eine erste Packstoffbahn (16b), mit einer ersten Zufuhreinheit (18b) zur Zufuhr der ersten Packstoffbahn (16b) zu der ersten Umform-einheit (12b), mit einer zweiten Umformeinheit (20b) zur Einbringung zumindest einer zweiten Kavität (22b) in eine zweite Packstoffbahn (24b) und mit einer zweiten Zufuhreinheit (26b) zur Zufuhr der zweiten Packstoffbahn (24b) zu der zweiten Umformeinheit (20b), wobei die erste Umformeinheit (12b) und die zweite Umformeinheit (20b) in einer relativen Positionierung zueinander variabel einstellbar sind.

Es wird vorgeschlagen, dass die Verpackungsmaschine (10b) eine Steuereinheit (30b) umfasst, welche dazu vorgesehen ist, die relative Positionierung der zweiten Umformeinheit (20b) zu der ersten Umformeinheit (12b) durch eine Bewegung der zweiten Umformeinheit (20b) in einer Vertikalrichtung (38b) einzustellen.

## Beschreibung

### Stand der Technik

Die Erfindung betrifft eine Verpackungsmaschine nach dem Oberbegriff des Anspruchs 1 und ein Verfahren zur Herstellung von Verpackungen nach dem Oberbegriff des Anspruchs 8.

Aus dem Stand der Technik sind bereits Verpackungsmaschinen zur Herstellung von Verpackungen bekannt. Beispielsweise sind Verpackungsmaschinen zur Herstellung von Verpackungen aus Kunststoffen, insbesondere sogenannten Clamshell-Verpackungen, welche aus zwei Hälften bestehen, die jeweils eine Kavität aufweisen, welche über ein Scharnier miteinander verbunden sind oder verbunden sein können und beispielsweise zum Verpacken von Lebensmitteln eingesetzt werden, bekannt. Mittels derartiger Verpackungsmaschinen werden in zwei Rollenbahnen aus Kunststoff jeweils die Kavitäten eingebracht und anschließend zusammengefügt. Aus Umweltgesichtspunkten werden in jüngster Zeit jedoch verstärkt Verpackungen nachgefragt und produziert, welche aus nachwachsenden und/oder gut recyclebaren Rohstoffen, beispielsweise aus faserbasierten Packstoffen, wie Papier und/oder Pappe, ausgebildet sind. Hierbei können ausschließlich faserbasierte Packstoffe, aber auch Verbundmaterialien, welche aus mit Kunststoff beschichteten faserbasierten Packstoffen bestehen, zum Einsatz kommen. Clamshell-Verpackungen können aus faserbasierten Packstoffen hergestellt werden, indem zwei Packstoffbahnen zunächst separat zueinander bearbeitet werden, wobei in jede Packstoffbahn eine Kavität eingebracht wird und die Packstoffbahnen anschließend zusammengeführt werden. Eine Herausforderung bei der Herstellung von Clamshell-Verpackungen aus faserbasierten Packstoffen mittels aus dem Stand der Technik bekannten Verpackungsmaschinen besteht darin, die Kavitäten in den jeweiligen Packstoffbahnen vor dem Zusammenfügen zu einer Verpackung deckungsgleich zueinander auszurichten. Eine Synchronisation der Kavitäten in den Packstoffbahnen erfolgt bei bisher bekannten Verpackungsmaschinen mittels sogenannter Tänzer. Ein Nachteil hierbei ist, dass eine Bahnspannung der Packstoffbahnen bei der Ausrichtung mittels der Tänzer nicht aufrechterhalten werden kann, wodurch eine Positionsgenauigkeit verloren geht. Dementsprechend ergibt sich ein erhöhter Ausschuss und damit einhergehend erhöhte Kosten. Ein weiterer Nachteil derartiger bisher bekannter Verpackungsmaschinen besteht darin, dass ein Formatwechsel, das heißt eine Änderung der Form und/oder Größe der Kavitäten, nicht möglich ist, sodass eine Flexibilität nachteilig stark eingeschränkt ist. Diese Nachteile werden von der vorliegenden Erfindung überwunden.

Ferner ist aus US 2015/0096263 A1 bereits eine Verpackungsmaschine zur Herstellung von Verpackungen aus faserbasiertem Packstoff bekannt, wobei die Verpackungsmaschine eine erste Umformeinheit zur Einbringung zumindest einer ersten Kavität in eine erste Packstoffbahn, eine erste Zufuhreinheit zur Zufuhr der ersten Packstoffbahn zu der ersten Umformeinheit, eine zweite Umformeinheit zur Einbringung zumindest einer zweiten Kavität in eine zweite Packstoffbahn und eine zweite Zufuhreinheit zur Zufuhr der zweiten Packstoffbahn zu der zweiten Umformeinheit umfasst, wobei die erste Umformeinheit und die zweite Umformeinheit in einer relativen Positionierung zueinander variabel einstellbar sind.

Die Aufgabe der Erfindung besteht insbesondere darin, eine gattungsgemäße Verpackungsmaschine und ein gattungsgemäßes Verfahren zur Herstellung von Verpackungen mit verbesserten Eigenschaften hinsichtlich einer Flexibilität bereitzustellen. Die Aufgabe wird erfindungsgemäß durch die Merkmale des Anspruchs 1 bzw. des Anspruchs 8 gelöst, während vorteilhafte Ausgestaltungen und Weiterbildungen der Erfindung den Unteransprüchen entnommen werden können.

### Offenbarung der Erfindung

Die Erfindung geht aus von einer Verpackungsmaschine, insbesondere Form-, Füll- und Verschließmaschine, zur Herstellung von Verpackungen, insbesondere Clamshell-Verpackungen, aus faserbasiertem Packstoff, mit einer ersten Umformeinheit zur Einbringung zumindest einer ersten Kavität in eine erste Packstoffbahn, mit einer ersten Zufuhreinheit zur Zufuhr der ersten Packstoffbahn zu der ersten Umformeinheit, mit einer zweiten Umformeinheit zur Einbringung zumindest einer zweiten Kavität in eine zweite Packstoffbahn und mit einer zweiten Zufuhreinheit zur Zufuhr der zweiten Packstoffbahn zu der zweiten Umformeinheit, wobei die erste Umformeinheit und die zweite Umformeinheit in einer relativen Positionierung zueinander variabel einstellbar sind.

Es wird vorgeschlagen, dass die Verpackungsmaschine eine Steuereinheit umfasst, welche dazu vorgesehen ist, die relative Positionierung der zweiten Umformeinheit zu der ersten Umformeinheit durch eine Bewegung der zweiten Umformeinheit in einer Vertikalrichtung einzustellen.

Durch eine derartige Ausgestaltung kann vorteilhaft eine Verpackungsmaschine mit einem besonders hohen Maß an Flexibilität bereitgestellt werden. Es kann insbesondere eine hohe Flexibilität bei der Herstellung von Clamshell-Verpackungen mit verschiedenen Formaten ermöglicht werden. Weiterhin kann vorteilhaft eine Genauigkeit bei der Ausrichtung zwischen der ersten Kavität in der ersten Packstoffbahn und der zweiten Kavität in der zweiten Packstoffbahn erhöht werden. Ferner kann vorteilhaft eine Kostenersparnis erzielt werden. Die Kostenersparnis ergibt sich zum einen bei der Herstellung von Clamshell-Verpackungen, welche aufgrund der hohen Genauigkeit der erfindungsgemäßen Verpackungsmaschine bei der Ausrichtung zwischen der ersten Kavität in der ersten Packstoffbahn und der zweiten Kavität in der zweiten Packstoffbahn eine besonders zuverlässige Herstellung mit sehr geringem Materialausschuss ermöglicht. Zudem können mit der erfindungsgemäßen Verpackungsmaschine vorteilhaft Clamshell-Verpackungen mit verschiedenen Formaten hergestellt werden, wobei sich ein Formatwechsel besonders einfach und wenig zeitaufwändig gestaltet. Zum anderen ergibt sich auch eine Kostenersparnis bei der Verpackungsmaschine selbst, da auf die bisher benötigten Tänzer vorteilhaft verzichtet werden kann. Es kann daher weiter vorteilhaft auch eine besonders kompakte Verpackungsmaschine bereitgestellt werden. Zudem kann durch eine derartige Ausgestaltung vorteilhaft eine automatische positionsgenaue Ausrichtung zwischen der ersten Kavität in der ersten Packstoffbahn und der zweiten Kavität in der zweiten Packstoffbahn ermöglicht werden. Die Vertikalrichtung bezieht sich hierbei auf einen aufgestellten und montierten Zustand der Verpackungsmaschine und verläuft senkrecht zu einem Boden, auf welchem die Verpackungsmaschine aufgestellt ist.

Die Verpackungsmaschine ist, ohne darauf beschränkt zu sein, zur Herstellung von Verpackungen, insbesondere Clamshell-Verpackungen, aus faserbasiertem Packstoff, zum Verpacken von Füllgütern, zum Beispiel Lebensmitteln, wie Brotaufstrichen, Pasten, Fertiggerichten oder Süßwaren, oder Beauty- und/oder Körperpflegeprodukten, wie Cremes, Shampoos und dergleichen, und einer Vielzahl von weiteren Füllgütern vorgesehen. Vorzugsweise ist die Verpackungsmaschine als eine Form-, Füll und Verschließmaschine ausgebildet und zum Formen einer Verpackung mit zumindest einer Kavität, anschließendem Befüllen der zumindest einen Kavität mit zumindest einem Füllgut und darauffolgendem Verschließen der befüllten Kavität vorgesehen. Unter "faserbasiertem Packstoff" soll ein Verpackungsmaterial verstanden werden, welches wenigstens zu einem Großteil von zumindest 55 Gew.-%, insbesondere zumindest 65 Gew.-%, vorteilhaft zumindest 75 Gew.-%, besonders vorteilhaft zumindest 85 Gew.- %, vorzugsweise zumindest 95 % und besonders bevorzugt zumindest 99 Gew-% aus pflanzlichen Ausgangsstoffen, insbesondere aus Holz, gewonnen und/oder aus Produkten aus pflanzlichen Ausgangsstoffen recycelt wurde. Beispielsweise kann der faserbasierte Packstoff Zellstoffe, insbesondere Zellulose, und/oder Holzstoffe und/oder Altpapierstoffe aufweisen und insbesondere als Papier und/oder Pappe ausgebildet sein. Der faserbasierte Packstoff könnte vollständig aus einem oder mehreren pflanzlichen Ausgangsstoffen ausgebildet sein. Denkbar ist auch, dass es sich bei dem faserbasierten Packstoff um einen Verbundwerkstoff handelt, welcher aus einem mit Kunststoff beschichteten pflanzlichen Ausgangsstoff besteht. Die erste Packstoffbahn und die zweite Packstoffbahn sind jeweils aus faserbasiertem Packstoff ausgebildet.

Unter einer "Umformeinheit" soll eine Einheit verstanden werden, welche dazu vorgesehen ist, zumindest einen Teilbereich einer Packstoffbahn umzuformen und dabei zumindest eine Kavität in die Packstoffbahn einzubringen. Ein Umformen des Teilbereichs der Packstoffbahn durch die Umformeinheit kann, ohne darauf beschränkt zu sein, durch plastische Verformung beispielsweise Tiefziehen und/oder Prägen und/oder dergleichen erfolgen und kann insbesondere einen oder mehrere Vorbehandlungsschritte, beispielsweise ein Befeuchten und/oder ein Erwärmen des zumindest einen Teilbereichs der Packstoffbahn umfassen. Die Umformeinheit weist die für eine gewünschte Umformung notwendigen Bauteile und/oder Elemente auf. Die erste Umformeinheit und die zweite Umformeinheit können zueinander im Wesentlichen identisch ausgebildet sein, wobei die erste Umformeinheit dazu vorgesehen sein kann, die erste Kavität mit einer ersten Form und einer ersten Größe in die erste Packstoffbahn einzubringen und die zweite Umformeinheit dazu vorgesehen sein kann, die zweite Kavität mit einer zweiten Form und zweiten Größe, welche jeweils zumindest im Wesentlichen der ersten Form und ersten Größe der ersten Kavität entsprechen, in die zweite Packstoffbahn einzubringen. Denkbar ist auch, dass die erste Umformeinheit und die zweite Umformeinheit zumindest teilweise unterschiedlich ausgebildet sind, wobei die erste Umformeinheit zur Einbringung der ersten Kavität mit der ersten Form und der ersten Größe in die erste Packstoffbahn vorgesehen sein kann und die zweite Umformeinheit zur Einbringung der zweiten Kavität mit einer zu der ersten Form und ersten Größe der ersten Kavität zumindest im Wesentlichen identischen Form und Größe in die zweite Packstoffbahn vorgesehen sein kann. Zudem ist denkbar, dass die Verpackungsmaschine nur mit einer der beiden Umformeinheiten betreibbar ist, während sich die andere der beiden Umformeinheiten in einem Inaktiv-Modus befindet. Beispielsweise kann die Verpackungsmaschine mit der ersten Umformeinheit zur Einbringung der ersten Kavität in die erste Packstoffbahn betreibbar sein, während die zweite Umformeinheit in dem Inaktivmodus ist, sodass keine zweite Kavität in die zweite Packstoffbahn eingebracht und die zweite Packstoffbahn als Abdeckbahn zum Verschließen der ersten Kavität in der ersten Packstoffbahn verwendet werden kann.

Unter einer "Zufuhreinheit" soll eine Einheit verstanden werden, welche dazu vorgesehen ist, die Lagen einer in Form einer Bahnrolle aufgerollten Packstoffbahn zu vereinzeln, insbesondere abschnittsweise abzurollen, und einer Umformeinheit zuzuführen. Die Zufuhreinheit weist zumindest ein Aufnahmeelement auf, welches dazu vorgesehen ist, die Bahnrolle aufzunehmen und drehbar zu lagern. Die Zufuhreinheit weist ferner zumindest ein Zufuhrelement zum Vereinzeln der Lagen der Bahnrolle und zur Zufuhr der Packstoffbahn zu der Umformeinheit auf. Vorzugsweise ist das Zufuhrelement dazu vorgesehen, die Lagen der Packstoffbahn auf der Bahnrolle mittels Zugkraft zu vereinzeln und der Umformeinheit zuzuführen. Die erste Zufuhreinheit ist dazu vorgesehen, die erste Packstoffbahn der ersten Umformeinheit in einer ersten Zufuhrrichtung zuzuführen. Die zweite Zufuhreinheit ist dazu vorgesehen, die zweite Packstoffbahn der zweiten Umformeinheit in einer zweiten Zufuhrrichtung zuzuführen. Unter einer "Zufuhrrichtung" soll eine Richtung verstanden werden, welche in einer Haupterstreckungsebene eines abgerollten Abschnitts einer Packstoffbahn liegt und in welcher der Abschnitt der Packstoffbahn in einem Betriebszustand der Verpackungsmaschine der Umformeinheit zugeführt wird. Unter einer "Haupterstreckungsebene" eines Objekts soll eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Die erste Zufuhrrichtung liegt in einer Haupterstreckungsebene eines abgerollten Abschnitts der ersten Packstoffbahn und die zweite Zufuhrrichtung liegt in einer Haupterstreckungsebene eines abgerollten Abschnitts der zweiten Packstoffbahn. Die erste Zufuhrrichtung und die zweite Zufuhrrichtung könnten parallel zueinander verlaufen. Beispielsweise könnten die erste Packstoffbahn und die zweite Packstoffbahn in dem Betriebszustand übereinander oder nebeneinander den jeweiligen Umformeinheiten zugeführt werden. Denkbar ist auch, dass die erste Zufuhrrichtung und die zweite Zufuhrrichtung gegenläufig zueinander ausgerichtet sind. Vorzugsweise sind die erste Zufuhrrichtung und die zweite Zufuhrrichtung winkelig zueinander ausgerichtet. Besonders bevorzugt sind die erste Zufuhrrichtung und die zweite Zufuhrrichtung zumindest im Wesentlichen senkrecht zueinander ausgerichtet, insbesondere in einem Winkel zwischen 86° und 94°, vorteilhaft zwischen 87° und 93°, besonders vorteilhaft zwischen 88° und 92°, vorzugsweise zwischen 89° und 91° und besonders bevorzugt in einem Winkel von 90°. Die Haupterstreckungsebene des abgerollten Abschnitts der ersten Packstoffbahn kann in einem Betriebszustand der Verpackungsmaschine parallel oder winkelig, beispielsweise senkrecht, zu einem Boden, auf welchem die Verpackungsmaschine aufgestellt ist, verlaufen. Gleichermaßen kann die Haupterstreckungsebene des abgerollten Abschnitts der zweiten Packstoffbahn in dem Betriebszustand der Verpackungsmaschine parallel oder winkelig, beispielsweise senkrecht, zu den Boden, auf welchem die Verpackungsmaschine aufgestellt ist, verlaufen.

Die Verpackungsmaschine weist eine Rahmeneinheit auf. In einem montierten und aufgestellten Zustand der Verpackungsmaschine bildet die Rahmeinheit ein Grundgerüst aus, mit welchem bestimmte Einheiten der Verpackungsmaschine, insbesondere die erste Zufuhreinheit, die zweite Zufuhreinheit, eine Dosiereinheit, eine Fügeeinheit und gegebenenfalls weitere Einheiten und/oder Elemente der Verpackungsmaschine fest verbunden sind. Die erste Umformeinheit kann in dem montierten und aufgestellten Zustand beweglich an der Rahmeneinheit gelagert und in zumindest zwei Positionen an der Rahmeneinheit feststellbar sein, sodass die erste Umformeinheit und die zweite Umformeinheit in einer relativen Positionierung zueinander variabel einstellbar sind. Alternativ oder zusätzlich kann die zweite Umformeinheit, in dem montierten und aufgestellten Zustand beweglich an der Rahmeneinheit gelagert und in zumindest zwei Positionen an der Rahmeneinheit feststellbar sein, sodass die erste Umformeinheit und die zweite Umformeinheit in einer relativen Positionierung zueinander variabel einstellbar sind.

Unter "zumindest im Wesentlichen" soll in diesem Dokument verstanden werden, dass eine Abweichung von einem vorgegebenen Wert insbesondere weniger als 25%, vorzugsweise weniger als 10% und besonders bevorzugt weniger als 5% eines vorgegebenen Werts abweicht.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Die erste Umformeinheit und die zweite Umformeinheit könnten jeweils in ihrer Position relativ zu der Rahmeneinheit der Verpackungsmaschine variabel einstellbar sein. In einer vorteilhaften Ausgestaltung wird jedoch vorgeschlagen, dass die erste Umformeinheit ortsfest, insbesondere ortsfest zu der Rahmeneinheit, und die zweite Umformeinheit in einer relativen Positionierung zu der ersten Umformeinheit variabel einstellbar ist. Hierdurch kann vorteilhaft eine besonders genaue Ausrichtung zwischen der ersten Kavität in der ersten Packstoffbahn und der zweiten Kavität in der zweiten Packstoffbahn mit besonders einfachen technischen Mitteln erreicht werden. Insbesondere kann eine Kostenersparnis gegenüber einer Ausgestaltung, in welcher die erste Umformeinheit und die zweite Umformeinheit jeweils in ihrer Position relativ zu der Rahmeneinheit der Verpackungsmaschine variabel einstellbar sind, erreicht werden. Denkbar ist alternativ auch, dass die zweite Umformeinheit ortsfest, insbesondere ortsfest zu der Rahmeneinheit, und die erste Umformeinheit in einer relativen Positionierung zu der zweiten Umformeinheit variabel einstellbar ist.

Zudem wird vorgeschlagen, dass die Verpackungsmaschine die Steuereinheit und eine Sensoreinheit zur Erfassung einer relativen Positionierung zwischen der ersten Kavität in der ersten Packstoffbahn und der zweiten Kavität in der zweiten Packstoffbahn aufweist, wobei die Steuereinheit dazu vorgesehen ist, zumindest ein Sensorsignal der Sensoreinheit zu verarbeiten, um die relative Positionierung zwischen der ersten Umformeinheit und der zweiten Umformeinheit einzustellen. Hierdurch kann vorteilhaft eine Genauigkeit bei der Ausrichtung zwischen der ersten Kavität in der ersten Packstoffbahn und der zweiten Kavität in der zweiten Packstoffbahn weiter verbessert werden. Unter einer "Steuereinheit" soll eine Einheit mit zumindest einer Steuerelektronik verstanden werden. Unter einer "Steuerelektronik" soll eine Einheit mit einer Prozessoreinheit und mit einer Speichereinheit sowie mit einem in der Speichereinheit gespeicherten Betriebsprogramm verstanden werden. Unter einer "Sensoreinheit" soll in diesem Zusammenhang eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschafts-änderungen eines Sensorbauteils, stattfinden kann. Es sind verschiedene, dem Fachmann als sinnvoll erscheinende Sensoreinheiten denkbar. Vorzugsweise ist die Sensoreinheit als eine optische Sensoreinheit ausgebildet und weist zumindest ein optisches Sensorelement zur Erfassung der relativen Positionierung zwischen der ersten Kavität in der ersten Packstoffbahn und der zweiten Kavität in der zweiten Packstoffbahn auf.

Darüber hinaus wird vorgeschlagen, dass eine Länge einer Positionierstrecke der zweiten Umformeinheit einer maximalen Vorzugslänge der zweiten Packstoffbahn durch die zweite Zufuhreinheit entspricht. Hierdurch kann vorteilhaft eine besonders kompakte Anordnung ermöglicht werden. Zugleich kann vorteilhaft ein hohes Maß an Flexibilität beibehalten werden, da eine Position der zweiten Umformeinheit über den gesamten Bereich der maximalen Vorzugslänge der zweiten Packstoffbahn durch die zweite Zufuhreinheit einstellbar ist. Unter einer "Vorzugslänge" einer Packstoffbahn soll hierbei ein Abstand zwischen den Mittelpunkten zweier unmittelbar zueinander benachbarten Kavitäten in der Packstoffbahn verstanden werden.

Ferner wird vorgeschlagen, dass eine Haupterstreckungsrichtung der zweiten Umformeinheit horizontal ausgerichtet ist. Hierdurch kann vorteilhaft eine Anordnung der zweiten Umformeinheit verbessert werden. Es kann vorteilhaft eine besonders kompakte Anordnung ermöglicht werden, wenn eine Haupterstreckungsrichtung der zweiten Umformeinheit horizontal ausgerichtet ist. Unter einer "Haupterstreckungsrichtung" der zweiten Umformeinheit soll dabei insbesondere eine Richtung verstanden werden, in welcher die zweite Umformeinheit die zweite Kavität in die zweite Packstoffbahn einbringt. Vorzugsweise ist die zweite Packstoffbahn in einem Bereich der zweiten Umformeinheit vertikal geführt. Vorzugsweise ist die horizontal ausgerichtete zweite Umformeinheit zwischen der ersten Umformeinheit und einer Fügeeinheit, welche zum Zusammenfügen eines ersten Teilbereichs der ersten Packstoffbahn, insbesondere der ersten Kavität, mit einem zweiten Teilbereich der zweiten Packstoffbahn, insbesondere der zweiten Kavität, zu einer Verpackung vorgesehen ist, angeordnet.

Des Weiteren wird vorgeschlagen, dass die Verpackungsmaschine eine Linearantriebseinheit aufweist, welche dazu vorgesehen ist, die zweite Umformeinheit in Vertikalrichtung zu bewegen. Hierdurch kann vorteilhaft eine zuverlässige Positionierung der zweiten Umformeinheit mit einfachen technischen Mitteln erreicht werden. Die Linearantriebseinheit ist dazu vorgesehen, die zweite Umformeinheit in Vertikalrichtung translatorisch zu bewegen. Die Linearantriebseinheit ist dazu vorgesehen, die gesamte zweite Umformeinheit in Vertikalrichtung translatorisch zu bewegen. Eine durch die Linearantriebseinheit erzeugte translatorische Bewegung der zweiten Umformeinheit in Vertikalrichtung ist zu der variablen Einstellung der relativen Positionierung zwischen der ersten Umformeinheit und der zweiten Umformeinheit vorgesehen und ist insbesondere zu unterscheiden von anderen Bewegungen, welche einzelne Elemente der zweiten Umformeinheit, beispielsweise Umformelemente, z.B. ein Stempel und/oder eine Matrize und/oder dergleichen, in einem Betriebszustand der Verpackungsmaschine ausführen können. Die Linearantriebseinheit weist zu der translatorischen Bewegung der zweiten Umformeinheit in Vertikalrichtung zumindest ein Linearantriebselement auf, welches mit der zweiten Umformeinheit verbunden ist. Das Linearantriebselement kann zu einer Erzeugung der translatorischen Bewegung, ohne darauf beschränkt zu sein, beispielsweise zumindest einen Kugelgewindetrieb und/oder zumindest einen Rollengewindetrieb und/oder zumindest einen Hydraulikzylinder und/oder zumindest einen Pneumatikzylinder und/oder zumindest einen elektromechanischen Linearantrieb, z.B. einen Linearmotor und/oder einen Linearaktor, aufweisen. Ein maximaler Stellweg der Linearantriebseinheit entspricht vorzugsweise einer Länge der Positionierstrecke der zweiten Umformeinheit. Vorzugsweise ist die Steuereinheit dazu vorgesehen, die translatorische Bewegung der Linearantriebseinheit zu steuern- und/oder zu regeln, um die relative Positionierung der zweiten Umformeinheit zu der ersten Umformeinheit einzustellen.

Darüber hinaus wird vorgeschlagen, dass die Verpackungsmaschine eine Fügeeinheit aufweist, welche dazu vorgesehen ist, die erste Packstoffbahn und die zweite Packstoffbahn zusammenzuführen und zumindest einen ersten Teilbereich der ersten Packstoffbahn, insbesondere einen an die erste Kavität angrenzenden Randbereich, und zumindest einen zweiten Teilbereich der zweiten Packstoffbahn, insbesondere einen an die zweite Kavität angrenzenden zweiten Randbereich, zu einer Verpackung zusammenzufügen, wobei die zweite Umformeinheit zwischen der ersten Umformeinheit und der Fügeeinheit angeordnet ist. Hierdurch kann vorteilhaft eine Herstellung von Clamshell-Verpackungen aus faserbasiertem Packstoff mit einfachen technischen Mitteln erreicht werden. Ferner kann eine platzsparende Anordnung der zweiten Umformeinheit erreicht werden, wodurch vorteilhaft eine besonders kompakte Verpackungsmaschine bereitgestellt werden kann. Die Fügeeinheit kann dazu vorgesehen sein, den ersten Teilbereich der ersten Packstoffbahn und den zweiten Teilbereich der zweiten Packstoffbahn ausschließlich mittels Druckeinwirkung zusammenzufügen. Denkbar ist auch, dass die Fügeeinheit dazu vorgesehen ist, den ersten Teilbereich der ersten Packstoffbahn und den zweiten Teilbereich der zweiten Packstoffbahn zusätzlich zu der Druckeinwirkung mittels zumindest eines Siegelmediums zusammenzufügen. Die Fügeeinheit weist zumindest ein Fügeelement zum Zusammenfügen des ersten Teilbereichs der ersten Packstoffbahn und des zweiten Teilbereichs der zweiten Packstoffbahn mittels Druckeinwirkung auf. Der erste Teilbereich umfasst vorzugsweise zumindest die erste Kavität in der ersten Packstoffbahn. Der zweite Teilbereich kann die zweite Kavität in der zweiten Packstoffbahn umfassen. Denkbar ist jedoch auch, dass die Verpackungsmaschine in einem Inaktivmodus der zweiten Umformeinheit betrieben wird, sodass in dem Betriebszustand der Verpackungsmaschine keine zweite Kavität in die zweite Packstoffbahn eingebracht wird und diese als Abdeckbahn zum Verschließen der ersten Kavität in der ersten Packstoffbahn verwendet wird. Vorzugsweise weist die Fügeeinheit zumindest ein weiteres Fügeelement auf, welches bevorzugt als ein Rollenbock ausgebildet und dazu vorgesehen ist, den ersten Teilbereich der ersten Packstoffbahn und den zweiten Teilbereich der zweiten Packstoffbahn zusammenzufügen, wenn die zweite Packstoffbahn als Abdeckbahn zum Verschließen der ersten Kavität verwendet wird. Vorzugsweise weist die Fügeeinheit zumindest ein Strukturierungselement zum Einbringen zumindest einer Feinstruktur in die Verpackung auf. Durch eine derartige Ausgestaltung kann vorteilhaft die Herstellung besonders funktionaler und/oder individualisierter Verpackungen ermöglicht werden. Beispielsweise könnte das Strukturelement zur Einbringung zumindest einer Feinstruktur zur Verbesserung einer Griffigkeit der Verpackung vorgesehen sein. Denkbar ist alternativ oder zusätzlich auch, dass das Strukturierungselement zur Einbringung zumindest einer Feinstruktur zu einer Individualisierung der Verpackung vorgesehen ist. Beispielsweise könnte das Strukturierungselement zum Einbringen zumindest einer Feinstruktur in einem individuellen Muster und/oder in der Form eines Markenlogos oder dergleichen vorgesehen sein. Das Strukturierungselement kann als ein mechanisches Strukturierungselement, beispielsweise als ein Stempel oder dergleichen, ausgebildet und dazu vorgesehen sein, die Feinstruktur mittels Druckeinwirkung in die Verpackung einzuprägen. Denkbar ist alternativ oder zusätzlich auch, dass das Strukturierungselement dazu vorgesehen ist, die Feinstruktur mittels thermischer Einwirkung in die Verpackung einzubringen. Das Strukturierungselement kann einstückig mit dem Fügeelement der Fügeeinheit ausgebildet sein. Hierdurch kann vorteilhaft eine Effizienz verbessert und eine besonders kompakte Verpackungsmaschine bereitgestellt werden, indem auf zusätzliche Einheiten und/oder Elemente zur Einbringung einer Feinstruktur verzichtet werden kann. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Die Erfindung geht ferner aus von einem Verfahren zur Herstellung von Verpackungen, insbesondere Clamshell-Verpackungen, aus faserbasiertem Packstoff, insbesondere mittels einer Verpackungsmaschine nach einer der vorhergehend beschriebenen Ausgestaltungen, wobei mittels einer ersten Umformeinheit zumindest eine erste Kavität in eine erste Packstoffbahn eingebracht wird und mittels einer zweiten Umformeinheit zumindest eine zweite Kavität in eine zweite Packstoffbahn eingebracht wird, wobei eine Position der ersten Kavität in der ersten Packstoffbahn mit einer Position der zweiten Kavität in der zweiten Packstoffbahn synchronisiert wird, indem eine relative Positionierung zwischen der ersten Umformeinheit und der zweiten Umformeinheit eingestellt wird.

Es wird vorgeschlagen, dass die relative Positionierung der zweiten Umformeinheit zu der ersten Umformeinheit durch eine Bewegung der zweiten Umformeinheit in einer Vertikalrichtung durch eine Steuereinheit eingestellt wird. Hierdurch kann vorteilhaft ein besonders flexibles Verfahren zur Herstellung von Verpackungen bereitgestellt werden. Insbesondere kann eine hohe Flexibilität bei der Herstellung von Clamshell-Verpackungen mit unterschiedlichen Formaten ermöglicht werden. Ferner kann vorteilhaft eine besonders hohe Passgenauigkeit erreicht werden, wenn die Position der ersten Kavität in der ersten Packstoffbahn mit der Position der zweiten Kavität in der zweiten Packstoffbahn synchronisiert wird, indem eine relative Positionierung zwischen der ersten Umformeinheit und der zweiten Umformeinheit eingestellt wird. Mittels des erfindungsgemäßen Verfahrens kann daher eine Herstellung von qualitativ besonders hochwertigen Clamshell-Verpackungen ermöglicht werden.

Die erfindungsgemäße Verpackungsmaschine und das erfindungsgemäße Verfahren zur Herstellung von Verpackungen sollen hierbei nicht auf die oben beschriebenen Anwendungen und Ausführungsformen beschränkt sein. Insbesondere kann die erfindungsgemäße Verpackungsmaschine zu einer Erfüllung einer hierin beschriebenen Funktionsweise eine von einer hierin genannten Anzahl von einzelnen Elementen, Bauteilen und Einheiten abweichende Anzahl aufweisen und das Verfahren kann eine abweichende Anzahl von Verfahrensschritten aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung einer Verpackungsmaschine mit einer ersten Umformeinheit zur Einbringung einer ersten Kavität in eine erste Packstoffbahn, mit einer ersten Zufuhreinheit zur Zufuhr der ersten Packstoffbahn, mit einer zweiten Umformeinheit zur Einbringung einer zweiten Kavität in eine zweite Packstoffbahn und mit einer zweiten Zufuhreinheit zur Zufuhr einer zweiten Packstoffbahn,
- Fig. 2: ein schematisches Verfahrensfließbild zur Darstellung eines erfindungsgemäßen Verfahrens zur Herstellung von Verpackungen,
- Fig. 3: ein erfindungsgemäßes Ausführungsbeispiel einer Verpackungsmaschine mit einer ersten Umformeinheit, einer ersten Zufuhreinheit, einer zweiten Umformeinheit und einer zweiten Zufuhreinheit in einer schematischen perspektivischen Darstellung und
- Fig. 4: und eine schematische perspektivische Teilansicht der Verpackungsmaschine aus Figur 3.

### Beschreibung der Ausführungsbeispiele

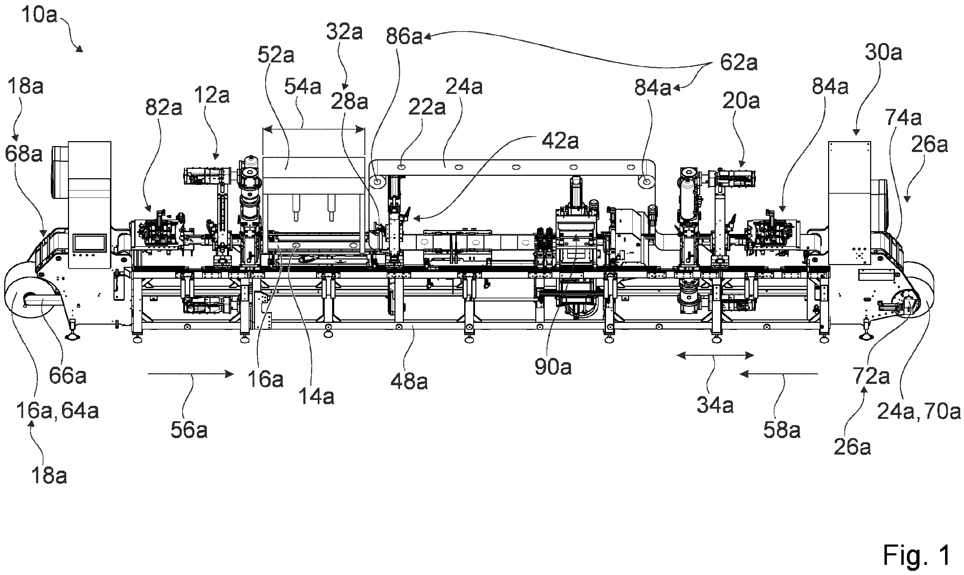

Figur 1 zeigt eine schematische perspektivische Ansicht einer Verpackungsmaschine 10a von einer Vorderseite. Die Verpackungsmaschine 10a ist als eine Form-, Füll- und Verschließmaschine ausgebildet und zur Herstellung von Verpackungen, insbesondere zur Herstellung von Clamshell-Verpackungen, aus faserbasiertem Packstoff, vorgesehen.

Die Verpackungsmaschine 10a weist eine erste Umformeinheit 12a zur Einbringung zumindest einer ersten Kavität 14a in eine erste Packstoffbahn 16a auf. Die erste Packstoffbahn 16a ist aus dreidimensional verformbarem faserbasiertem Packstoff, beispielsweise aus Papier und/oder Pappe, ausgebildet.

Von mehrfach vorhandenen Objekten ist in den Figuren lediglich eines mit einem Bezugszeichen versehen.

Die Verpackungsmaschine 10a weist eine erste Zufuhreinheit 18a zur Zufuhr der ersten Packstoffbahn 16a zu der ersten Umformeinheit 12a auf. Die erste Packstoffbahn 16a ist zumindest teilweise in mehreren Lagen auf einer ersten Bahnrolle 64a aufgerollt. Die erste Bahnrolle 64a ist in einem ersten Aufnahmeelement 66a der ersten Zufuhreinheit 18a drehbar gelagert. Die erste Zufuhreinheit 18a ist dazu vorgesehen, die erste Packstoffbahn 16a der ersten Umformeinheit 12a in einer ersten Zufuhrrichtung 56a zuzuführen. Die erste Zufuhreinheit 18a weist hierzu ein erstes Zufuhrelement 68a auf, mittels dessen die erste Packstoffbahn 16a in einem Betriebszustand der Verpackungsmaschine 10a durch Zugkraft abschnittsweise von der ersten Bahnrolle 64a abgerollt wird.

Die Verpackungsmaschine 10a weist eine zweite Umformeinheit 20a zur Einbringung zumindest einer zweiten Kavität 22a in eine zweite Packstoffbahn 24a auf.

In dem Betriebszustand der Verpackungsmaschine 10a bringt die erste Umformeinheit 12a die zumindest eine erste Kavität 14a mit einer bestimmten Form und Größe in die erste Packstoffbahn 16a ein und die zweite Umformeinheit 20a bringt die zumindest eine zweite Kavität 22a, deren Form und Größe zumindest im Wesentlichen der Form und Größe der ersten Kavität 14a in der ersten Packstoffbahn 16a entspricht, in die zweite Packstoffbahn 24a ein.

Die Verpackungsmaschine 10a weist ferner eine zweite Zufuhreinheit 26a zur Zufuhr der zweiten Packstoffbahn 24a zu der zweiten Umformeinheit 20a auf. Die zweite Zufuhreinheit 26a ist dazu vorgesehen, die zweite Packstoffbahn 24a in einer zweiten Zufuhrrichtung 58a zuzuführen. In dem vorliegenden Ausführungsbeispiel sind die erste Zufuhrrichtung 56a und die zweite Zufuhrrichtung 58a gegenläufig zueinander ausgerichtet. Die zweite Packstoffbahn 24a ist zumindest teilweise in mehreren Lagen auf einer zweiten Bahnrolle 70a aufgerollt. Die zweite Bahnrolle 70a ist in einem zweiten Aufnahmeelement 72a der zweiten Zufuhreinheit 18a drehbar gelagert. Die zweite Zufuhreinheit 26a weist zu der Zufuhr der zweiten Packstoffbahn 24a ein zweites Zufuhrelement 74a auf, mittels dessen die zweite Packstoffbahn 24a in dem Betriebszustand der Verpackungsmaschine 10a abschnittsweise von der zweiten Bahnrolle 70a abgerollt wird.

Die erste Umformeinheit 12a und die zweite Umformeinheit 20a sind in einer relativen Positionierung zueinander variabel einstellbar.

Vorliegend ist die erste Umformeinheit 12a ortsfest, und zwar ortsfest zu einer Rahmeinheit 48a der Verpackungsmaschine 10a. Die zweite Umformeinheit 20a ist in einer relativen Positionierung zu der ersten Umformeinheit 12a variabel einstellbar, und zwar entlang einer Positionierstrecke 34a.

Die Verpackungsmaschine 10a weist eine Umlenkeinheit 62a auf. Die Umlenkeinheit 62a ist dazu vorgesehen, die zweite Packstoffbahn 24a umzulenken und oberhalb der ersten Packstoffbahn 16a parallel zu der ersten Zufuhrrichtung 56a über die erste Packstoffbahn 16a zu führen. In einem Betriebszustand der Verpackungsmaschine 10a lenkt die Umlenkeinheit 62a die zweite Packstoffbahn 24a also von der zweiten Zufuhrrichtung 58a um 180° in eine zu der ersten Zufuhrrichtung 56a parallele und gleichläufige Richtung um. Die Umlenkeinheit 62a weist zumindest eine Umlenkrolle 84a zum Umlenken der zweiten Packstoffbahn 24a auf. Vorliegend weist die Umlenkeinheit 62a die Umlenkrolle 84a und eine weitere Umlenkrolle 86a zum Umlenken der zweiten Packstoffbahn 24a auf.

Die Verpackungsmaschine 10a weist eine Dosiereinheit 52a auf. Die Dosiereinheit 52a ist zum Dosieren eines Füllguts (nicht dargestellt) in die erste Kavität 14a in der ersten Packstoffbahn 16a vorgesehen. Bei dem Füllgut kann es sich beispielsweise um Lebensmittel handeln. Die Dosiereinheit 52a ist in Bezug auf die erste Zufuhrrichtung 56a zwischen der ersten Zufuhreinheit 18a und der Umlenkeinheit 62a angeordnet.

Eine Dosierstrecke 54a für die Dosiereinheit 52a ist zwischen der ersten Zufuhreinheit 18a und der Umlenkeinheit 62a entlang der ersten Zufuhrrichtung 56a variabel einstellbar. Die Rahmeneinheit 48a der Verpackungsmaschine 10a ist zu einer Einstellung einer Länge der Dosierstrecke 54a zwischen der Zufuhreinheit 18a und der Umlenkeinheit 62a variabel mittels Ergänzungselementen (nicht dargestellt) erweiterbar.

Die Verpackungsmaschine 10a weist eine Steuereinheit 30a auf. Die Steuereinheit 30a ist dazu vorgesehen, die relative Positionierung zwischen der ersten Umformeinheit 12a und der zweiten Umformeinheit 20a einzustellen.

Die Verpackungsmaschine 10a weist eine Sensoreinheit 32a auf. Die Sensoreinheit 32a ist zur Erfassung einer relativen Positionierung zwischen oder ersten Kavität 14a in der ersten Packstoffbahn 16a und der zweiten Kavität 22a in der zweiten Packstoffbahn 24a vorgesehen. Die Sensoreinheit 32a weist hierzu zumindest ein Sensorelement 28a auf. Das Sensorelement 28a ist an der Rahmeneinheit 48a angeordnet und dazu vorgesehen, eine Position der ersten Kavität 14a in der ersten Packstoffbahn 16a in Bezug auf eine Vorzugslänge der ersten Packstoffbahn 16a durch die erste Zufuhreinheit 18a zu erfassen. Die Erfassung der relativen Positionierung zwischen der ersten Kavität 14a in der ersten Packstoffbahn 16a und der zweiten Kavität 22a in der zweiten Packstoffbahn 24a durch das Sensorelement 28a erfolgt vorliegend optisch anhand von Druckmarken (nicht dargestellt) auf der ersten Packstoffbahn 16a und der zweiten Packstoffbahn 24a.

Die Steuereinheit 30a ist dazu vorgesehen, zumindest ein Sensorsignal der Sensoreinheit 32a zu verarbeiten, um die relative Positionierung zwischen der ersten Umformeinheit 12a und der zweiten Umformeinheit 20a einzustellen. Die Steuereinheit 30a ist dazu vorgesehen, eine Position der zweiten Umformeinheit 20a entlang der Positionierstrecke 34a einzustellen. Eine Länge der Positionierstrecke 34a entspricht einer maximalen Vorzugslänge der zweiten Packstoffbahn 24a durch die zweite Zufuhreinheit 26a.

Die Verpackungsmaschine 10a weist eine Fügeeinheit 42a auf. Die Fügeeinheit 42a ist dazu vorgesehen, die erste Packstoffbahn 16a und die zweite Packstoffbahn 24a zusammenzuführen und die erste Kavität 14a in der ersten Packstoffbahn 16a und die zweite Kavität 22a in der zweiten Packstoffbahn 24a mittels Druckeinwirkung zu einer Verpackung (nicht dargestellt), und zwar zu einer Clamshell-Verpackung, zusammenzufügen. Die Fügeeinheit 42a weist zumindest ein Strukturierungselement (nicht dargestellt) zum Einbringen einer Feinstruktur in die Verpackung auf.

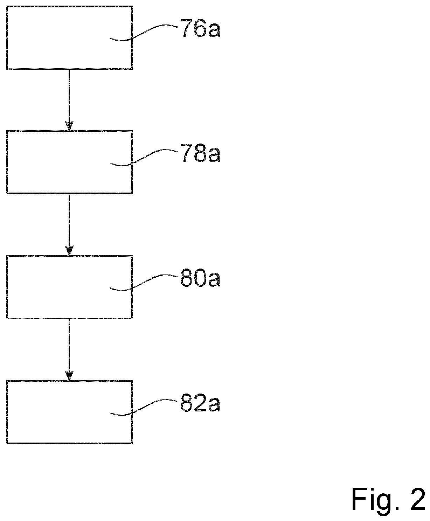

Figur 2 zeigt ein schematisches Verfahrensfließbild eines erfindungsgemäßen Verfahrens zur Herstellung von Verpackungen, und zwar Clamshell-Verpackungen, aus faserbasiertem Packstoff. Das Verfahren ist insbesondere mittels der vorhergehend beschriebenen Verpackungsmaschine 10a durchführbar. In dem Verfahren wird mittels der ersten Umformeinheit 12a zumindest die erste Kavität 14a in die erste Packstoffbahn 16a eingebracht und zumindest die zweite Kavität 22a in die zweite Packstoffbahn 24a eingebracht, wobei eine Position der ersten Kavität 14a in der ersten Packstoffbahn 16a mit einer Position der zweiten Kavität 22a in der zweiten Packstoffbahn 24a synchronisiert wird, indem eine relative Positionierung zwischen der ersten Umformeinheit 12a und der zweiten Umformeinheit 20a eingestellt wird. Das Verfahren umfasst zumindest vier Verfahrensschritte 76a, 78a, 80a, 82a. In einem ersten Verfahrensschritt 76a des Verfahrens wird ein Abschnitt der ersten Packstoffbahn 16a der ersten Umformeinheit 12a zugeführt. Gleichzeitig wird in dem ersten Verfahrensschritt 76a ein Abschnitt der zweiten Packstoffbahn 24a der zweiten Umformeinheit 20a zugeführt. In dem ersten Verfahrensschritt 76a wird die erste Packstoffbahn 16a der ersten Umformeinheit 12a in der ersten Zufuhrrichtung 56a zugeführt, und zwar insbesondere mittels der ersten Zufuhreinheit 18a. Gleichzeitig wird in dem ersten Verfahrensschritt 76a die zweite Packstoffbahn 24a der zweiten Umformeinheit 20a in der zweiten Zufuhrrichtung 58a zugeführt. In einem zweiten Verfahrensschritt 78a des Verfahrens wird die erste Kavität 14a in die erste Packstoffbahn 16a eingebracht, und zwar mittels der ersten Umformeinheit 12a. Gleichzeitig wird in dem zweiten Verfahrensschritt 78a eine relative Position der ersten Kavität 14a in der ersten Packstoffbahn 16a ermittelt, und zwar in Bezug auf eine Vorzugslänge der ersten Packstoffbahn 16a durch die erste Zufuhreinheit 18a. Eine Ermittlung der relativen Position der ersten Kavität 14a in der ersten Packstoffbahn 16a kann insbesondere mittels der Sensoreinheit 32a erfolgen. In einem dritten Verfahrensschritt 80a des Verfahrens wird eine relative Positionierung zwischen der ersten Umformeinheit 12a und der zweiten Umformeinheit 20a eingestellt, wobei eine Position der zweiten Umformeinheit 20a eingestellt wird, während die erste Umformeinheit 12a ortsfest positioniert bleibt. Die Position der zweiten Umformeinheit 20a wird dabei entlang der Positionierstrecke 34a um einen Betrag verändert, welcher einem ganzzahligen Vielfachen der Vorzugslänge der ersten Packstoffbahn 16a durch die erste Zufuhreinheit 18a entspricht. Anschließend wird in dem dritten Verfahrensschritt 80a die zweite Kavität 22a in die zweite Packstoffbahn 24a eingebracht, und zwar mittels der zweiten Umformeinheit 20a. Durch die Einstellung der relativen Positionierung zwischen der ersten Umformeinheit 12a und der zweiten Umformeinheit 20a in dem dritten Verfahrensschritt 80a wird sichergestellt, dass die Position der ersten Kavität 14a in der ersten Packstoffbahn 16a und die Position der zweiten Kavität 22a in der zweiten Packstoffbahn 24a zueinander synchron sind. Anschließend werden in einem vierten Verfahrensschritt 82 des Verfahrens die erste Packstoffbahn 16a und die zweite Packstoffbahn 24a zusammengeführt und die erste Kavität 14a und die zweite Kavität 22a mittels Druckeinwirkung zusammengefügt, und zwar insbesondere mittels der Fügeeinheit 42a. Optional wird in dem vierten Verfahrensschritt 82a eine Feinstruktur in die Verpackung eingebracht, und zwar insbesondere mittels eines Strukturierungselements (nicht dargestellt) der Fügeeinheit 42a. Anschließend wird in dem vierten Verfahrensschritt 82a die Verpackung aus der ersten Packstoffbahn 16a und der zweiten Packstoffbahn 24a ausgestanzt, und zwar insbesondere mittels einer Ausstanzeinheit 90a der Verpackungsmaschine 10a (vgl. Figur 1).

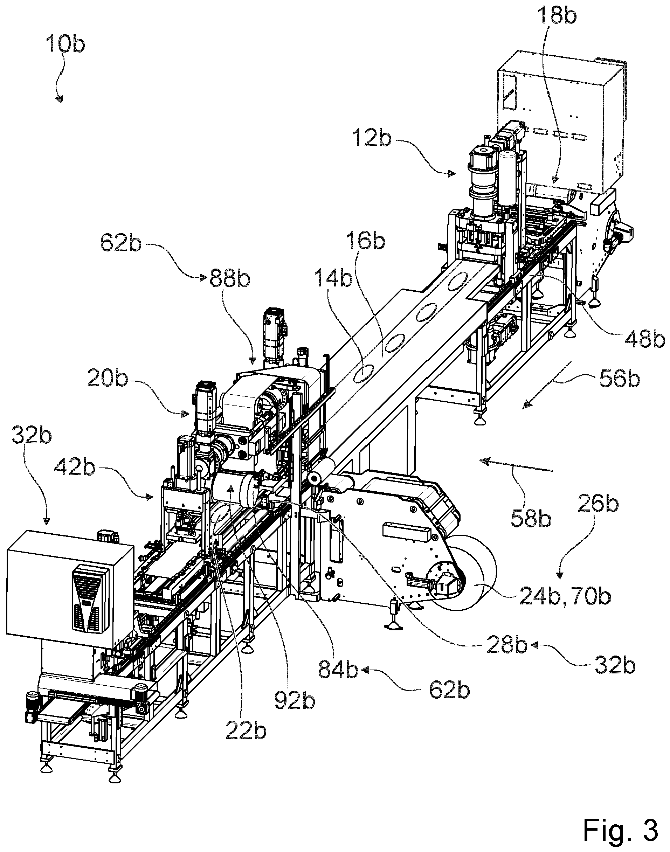

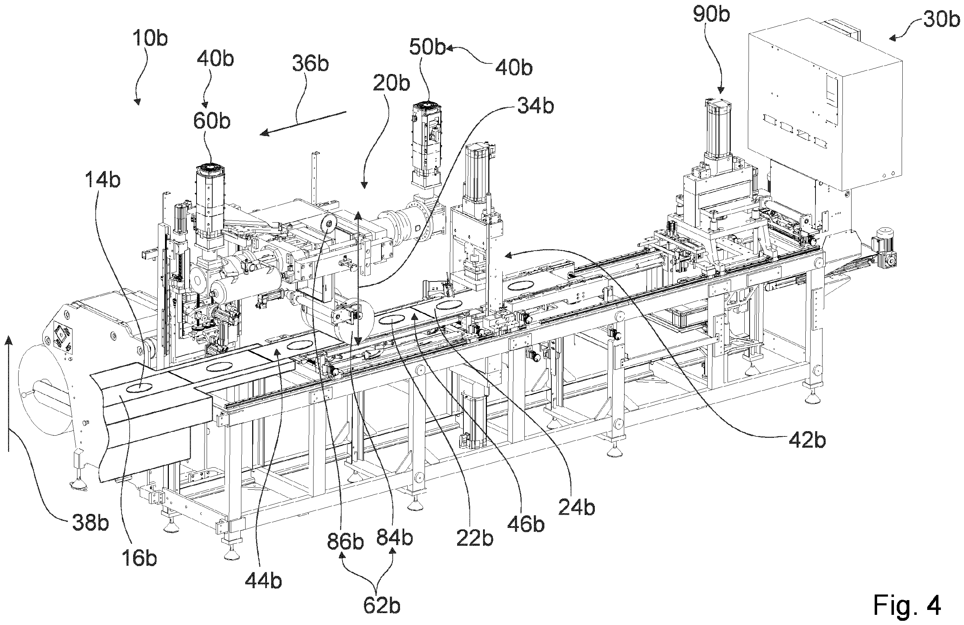

In den Figuren 3 und 4 ist ein erfindungsgemäßes Ausführungsbeispiel gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 2, verwiesen werden kann. Zur Unterscheidung der Ausführungsbeispiele ist der Buchstabe a den Bezugszeichen des Ausführungsbeispiels in den Figuren 1 und 2 nachgestellt. Im Ausführungsbeispiel der Figuren 3 und 4 ist der Buchstabe a durch den Buchstaben b ersetzt.

Figur 3 zeigt ein erfindungsgemäßes Ausführungsbeispiel einer Verpackungsmaschine 10b in einer schematischen perspektivischen Ansicht. Analog zu dem vorhergehenden Ausführungsbeispiel ist die Verpackungsmaschine 10b als eine Form-, Füll- und Verschließmaschine ausgebildet und zur Herstellung von Verpackungen, insbesondere zur Herstellung von Clamshell-Verpackungen, aus faserbasiertem Packstoff, vorgesehen.

Die Verpackungsmaschine 10b weist eine erste Umformeinheit 12b zur Einbringung zumindest einer ersten Kavität 14b in eine erste Packstoffbahn 16b auf. Die erste Umformeinheit 12b der Verpackungsmaschine 10b ist im Wesentlichen identisch zu der ersten Umformeinheit 12a der Verpackungsmaschine 10a aus dem ersten Ausführungsbeispiel ausgebildet. Die Verpackungsmaschine 10b weist eine erste Zufuhreinheit 18b zur Zufuhr der ersten Packstoffbahn 16b zu der ersten Umformeinheit 12b auf. Die erste Zufuhreinheit 18b ist dazu vorgesehen, die erste Packstoffbahn 16b der ersten Umformeinheit 12b in einer ersten Zufuhrrichtung 56b zuzuführen.

Die Verpackungsmaschine 10b weist eine zweite Umformeinheit 20b zur Einbringung zumindest einer zweiten Kavität 22b in eine zweite Packstoffbahn 24b auf.

Die Verpackungsmaschine 10b weist ferner eine zweite Zufuhreinheit 26b zur Zufuhr der zweiten Packstoffbahn 24b zu der zweiten Umformeinheit 20b auf. Die zweite Zufuhreinheit 26b ist dazu vorgesehen, die zweite Packstoffbahn 24b der zweiten Umformeinheit 20b in einer zweiten Zufuhrrichtung 58b zuzuführen.

Im Unterschied zu dem vorhergehenden Ausführungsbeispiel sind die erste Zufuhrrichtung 56b und die zweite Zufuhrrichtung 58b zueinander winkelig ausgerichtet. Die erste Zufuhrrichtung 56b und die zweite Zufuhrrichtung 58b sind zumindest im Wesentlichen senkrecht, vorliegend senkrecht, zueinander ausgerichtet.

Die Verpackungsmaschine 10b weist eine Umlenkeinheit 62b auf. Die Umlenkeinheit 62b ist dazu vorgesehen, die zweite Packstoffbahn 24b umzulenken und oberhalb der ersten Packstoffbahn 16b parallel zu der ersten Zufuhrrichtung 28b über die erste Packstoffbahn 16b zu führen. In einem Betriebszustand der Verpackungsmaschine 10b lenkt die Umlenkeinheit 62b die zweite Packstoffbahn 24b also von der zweiten Zufuhrrichtung 58b um 90° in eine zu der ersten Zufuhrrichtung 56b parallele und gleichläufige Richtung um. Die Umlenkeinheit 62b weist zu der Umlenkung der zweiten Packstoffbahn 24b ein Umlenkdreieck 88b auf. Die zweite Umformeinheit 20b ist entlang der ersten Zufuhrrichtung 56b hinter dem Umlenkdreieck 88b angeordnet. Die Umlenkeinheit 62b weist außerdem eine Umlenkrolle 84b und eine weitere Umlenkrolle 86b (vgl. Figur 4) auf. Die Umlenkrolle 84b ist mit einer Aussparung 92b versehen.

Die erste Umformeinheit 12b und die zweite Umformeinheit 20b sind in einer relativen Positionierung zueinander variabel einstellbar.

Die erste Umformeinheit 12b ist ortsfest, und zwar ortsfest zu einer Rahmeinheit 48b der Verpackungsmaschine 10b. Die zweite Umformeinheit 20b ist in einer relativen Positionierung zu der ersten Umformeinheit 12b variabel einstellbar.

Die Verpackungsmaschine 10b weist eine Steuereinheit 30b auf. Die Steuereinheit 30b ist dazu vorgesehen, die relative Positionierung zwischen der ersten Umformeinheit 12b und der zweiten Umformeinheit 20b einzustellen.

Die Verpackungsmaschine 10b weist eine Sensoreinheit 32b auf. Die Sensoreinheit 32b ist zur Erfassung einer relativen Positionierung zwischen oder ersten Kavität 14b in der ersten Packstoffbahn 16b und der zweiten Kavität 22b in der zweiten Packstoffbahn 24b vorgesehen. Die Sensoreinheit 32b weist hierzu zumindest ein Sensorelement 28b auf. Das Sensorelement 28b ist an der Rahmeneinheit 48b angeordnet und dazu vorgesehen, eine Position der ersten Kavität 14b in der ersten Packstoffbahn 16b in Bezug auf eine Vorzugslänge der ersten Packstoffbahn 16b durch die erste Zufuhreinheit 18b zu erfassen. Die Erfassung der relativen Positionierung zwischen der ersten Kavität 14b in der ersten Packstoffbahn 16b und der zweiten Kavität 22b in der zweiten Packstoffbahn 24b durch das Sensorelement 28b erfolgt vorliegend optisch anhand von Druckmarken (nicht dargestellt) auf der ersten Packstoffbahn 16b und der zweiten Packstoffbahn 24b.

Die Steuereinheit 30b ist dazu vorgesehen, zumindest ein Sensorsignal der Sensoreinheit 32b zu verarbeiten, um die relative Positionierung zwischen der ersten Umformeinheit 12b und der zweiten Umformeinheit 20b entlang einer Positionierstrecke 34b einzustellen. Eine Länge der Positionierstrecke 34b entspricht einer maximalen Vorzugslänge der zweiten Packstoffbahn 24b durch die zweite Zufuhreinheit 26b.

Die Verpackungsmaschine 10b weist eine Fügeeinheit 42b auf. Die Fügeeinheit 42b ist dazu vorgesehen, die erste Packstoffbahn 16b und die zweite Packstoffbahn 24b zusammenzuführen und zumindest einen ersten Teilbereich 44b (vgl. Figur 4) der ersten Packstoffbahn 16b, insbesondere einen an die erste Kavität 14b angrenzenden ersten Randbereich, und zumindest einen zweiten Teilbereich 46b (vgl. Figur 4) der zweiten Packstoffbahn 24b, insbesondere einen and die zweite Kavität 22b angrenzenden zweiten Randbereich, mittels Druckeinwirkung zu einer Verpackung (nicht dargestellt), und zwar zu einer Clamshell-Verpackung, zusammenzufügen. Die Fügeinheit 42b weist zumindest ein Strukturierungselement (nicht dargestellt) zum Einbringen einer Feinstruktur in die Verpackung auf. Im Unterschied zu dem vorhergehenden Ausführungsbeispiel ist die zweite Umformeinheit 20b zwischen der ersten Umformeinheit 12b und der Fügeeinheit 42b angeordnet.

Figur 4 zeigt die Verpackungsmaschine 10b in einer schematischen Teilansicht mit Blick auf die zweite Umformeinheit 20b. Im Unterschied zu dem vorhergehenden Ausführungsbeispiel ist eine Haupterstreckungsrichtung 36b der zweiten Umformeinheit 20b horizontal ausgerichtet.

Die zweite Umformeinheit 20b ist entlang der Positionierstrecke 34b in einer Vertikalrichtung 38b verfahrbar. Die zweite Umformeinheit 20b ist in Vertikalrichtung 38b zwischen der Umlenkrolle 84b und der weiteren Umlenkrolle 86b der Umlenkeinheit 62b angeordnet. Die Positionierstrecke 34b erstreckt sich von einer Oberkante der Umlenkrolle 84b bis zu einer Unterkante der weiteren Umlenkrolle 86b.

Die Steuereinheit 30b ist dazu vorgesehen, die relative Positionierung der zweiten Umformeinheit 20b zu der ersten Umformeinheit 12b durch eine Bewegung der zweiten Umformeinheit 20b in der Vertikalrichtung 38b einzustellen. Die Verpackungsmaschine 10b weist eine Linearantriebseinheit 40b auf, welche dazu vorgesehen ist, die zweite Umformeinheit 20b in Vertikalrichtung 38b zu bewegen. Die Linearantriebseinheit 40b weist ein Linearantriebselement 50b und ein weiteres Linearantriebselement 60b auf. Die Linearantriebselemente 50b, 60b sind als Pneumatikzylinder ausgebildet und dazu vorgesehen, die zweite Umformeinheit 20b in eine translatorische Bewegung entlang der Positionierstrecke 34b zu versetzen. Die Steuereinheit 30b ist mit der Linearantriebseinheit 40b verbunden und dazu vorgesehen, die relative Positionierung der zweiten Umformeinheit 20b zu der ersten Umformeinheit 12b in der Vertikalrichtung 38b mittels der Linearantriebseinheit 40b einzustellen.

Die Verpackungsmaschine 10b weist ferner eine Ausstanzeinheit 90b auf. Die Ausstanzeinheit 90b ist dazu vorgesehen, die als Verpackung zusammengefügten Teilbereiche 44b, 46b aus der ersten Packstoffbahn 16b und der zweiten Packstoffbahn 24b auszustanzen. Aufgrund der winkeligen Anordnung zwischen der ersten Zufuhrrichtung 56b und der zweiten Zufuhrrichtung 58b (vgl. Figur 3) kann eine Ausgabe der Verpackungen nach dem Ausstanzen durch die Ausstanzeinheit 90b in der ersten Zufuhrrichtung 56b erfolgen.

## Patentansprüche

1. Verpackungsmaschine (10b), insbesondere Form-, Füll- und Verschließmaschine, zur Herstellung von Verpackungen, insbesondere Clamshell-Verpackungen, aus faserbasiertem Packstoff, mit einer ersten Umformeinheit (12b) zur Einbringung zumindest einer ersten Kavität (14b) in eine erste Packstoffbahn (16b), mit einer ersten Zufuhreinheit (18b) zur Zufuhr der ersten Packstoffbahn (16b) zu der ersten Umformeinheit (12b), mit einer zweiten Umformeinheit (20b) zur Einbringung zumindest einer zweiten Kavität (22b) in eine zweite Packstoffbahn (24b) und mit einer zweiten Zufuhreinheit (26b) zur Zufuhr der zweiten Packstoffbahn (24b) zu der zweiten Umformeinheit (20b), wobei die erste Umformeinheit (12b) und die zweite Umformeinheit (20b) in einer relativen Positionierung zueinander variabel einstellbar sind, **gekennzeichnet durch** eine Steuereinheit (30b), welche dazu vorgesehen ist, die relative Positionierung der zweiten Umformeinheit (20b) zu der ersten Umformeinheit (12b) durch eine Bewegung der zweiten Umformeinheit (20b) in einer Vertikalrichtung (38b) einzustellen.

2. Verpackungsmaschine (10b) nach Anspruch 1, **dadurch gekennzeichnet, dass** die erste Umformeinheit (12b) ortsfest, insbesondere ortsfest zu einer Rahmeneinheit (48b), und die zweite Umformeinheit (20b) in einer relativen Positionierung zu der ersten Umformeinheit (12b) variabel einstellbar ist.

3. Verpackungsmaschine (10b) nach einem der vorhergehenden Ansprüche, **gekennzeichnet durch** die Steuereinheit (30b) und eine Sensoreinheit (32b) zur Erfassung einer relativen Positionierung zwischen der ersten Kavität (14b) in der ersten Packstoffbahn (16b) und der zweiten Kavität (22b) in der zweiten Packstoffbahn (24b), wobei die Steuereinheit (30b) dazu vorgesehen ist, zumindest ein Sensorsignal der Sensoreinheit (32b) zu verarbeiten, um die relative Positionierung zwischen der ersten Umformeinheit (12b) und der zweiten Umformeinheit (20b) einzustellen.

4. Verpackungsmaschine (10b) nach einem der vorhergehenden Ansprüche, **dadurch gekennzeichnet, dass** eine Länge einer Positionierstrecke (34b) der zweiten Umformeinheit (20b) einer maximalen Vorzugslänge der zweiten Packstoffbahn (24b) durch die zweite Zufuhreinheit (26b) entspricht.

5. Verpackungsmaschine (10b) nach einem der vorhergehenden Ansprüche, **dadurch gekennzeichnet, dass** eine Haupterstreckungsrichtung (36b) der zweiten Umformeinheit (20b) horizontal ausgerichtet ist.

6. Verpackungsmaschine (10b) nach einem der vorhergehenden Ansprüche, **gekennzeichnet durch** eine Linearantriebseinheit (40b), welche dazu vorgesehen ist, die zweite Umformeinheit (20b) in Vertikalrichtung (38b) zu bewegen.

7. Verpackungsmaschine (10b) nach einem der vorhergehenden Ansprüche, **gekennzeichnet durch** eine Fügeeinheit (42b), welche dazu vorgesehen ist, die erste Packstoffbahn (16b) und die zweite Packstoffbahn (24b) zusammenzuführen und zumindest einen ersten Teilbereich (44b) der ersten Packstoffbahn (16b), insbesondere einen an die erste Kavität (14b) angrenzenden ersten Randbereich, und zumindest einen zweiten Teilbereich (46b) der zweiten Packstoffbahn (24b), insbesondere einen an die zweite Kavität (22b) angrenzenden zweiten Randbereich, zu einer Verpackung zusammenzufügen, wobei die zweite Umformeinheit (20b) zwischen der ersten Umformeinheit (12b) und der Fügeinheit (42b) angeordnet ist.

8. Verfahren zur Herstellung von Verpackungen, insbesondere Clamshell-Verpackungen, aus faserbasiertem Packstoff, insbesondere mittels einer Verpackungsmaschine (10b) nach einem der Ansprüche 1 bis 7, wobei mittels einer ersten Umformeinheit ( 12b) zumindest eine erste Kavität (14b) in eine erste Packstoffbahn (16b) eingebracht wird und mittels einer zweiten Umformeinheit (20b) zumindest eine zweite Kavität (22b) in eine zweite Packstoffbahn (24b) eingebracht wird, wobei eine Position der ersten Kavität (14b) in der ersten Packstoffbahn (16b) mit einer Position der zweiten Kavität (22b) in der zweiten Packstoffbahn (24b) synchronisiert wird, indem eine relative Positionierung zwischen der ersten Umformeinheit (12b) und der zweiten Umformeinheit (20b) eingestellt wird, **dadurch gekennzeichnet, dass** die relative Positionierung der zweiten Umformeinheit (20b) zu der ersten Umformeinheit (12b) durch eine Bewegung der zweiten Umformeinheit (20b) in einer Vertikalrichtung (38b) durch eine Steuereinheit (30b) eingestellt wird.
